Europäisches Patentamt

European Patent Office

Office européen des brevets

(11) Publication number: **0 225 146 B1**

(12) **EUROPEAN PATENT SPECIFICATION**

(45) Date of publication of patent specification: **03.06.92**　(51) Int. Cl.⁵: **C10J 3/46**, C01B 3/36

(21) Application number: **86309154.2**

(22) Date of filing: **24.11.86**

(54) **Two-stage coal gasification process.**

(30) Priority: **29.11.85 US 803031**

(43) Date of publication of application:
**10.06.87 Bulletin  87/24**

(45) Publication of the grant of the patent:
**03.06.92 Bulletin  92/23**

(84) Designated Contracting States:
**BE DE FR GB**

(56) References cited:
**FR-A- 2 400 550
GB-A- 2 051 121
US-A- 3 607 156**

**PATENT ABSTRACTS OF JAPAN, vol. 8, no.
34 (C-210)[1471], 15th February 1984; & JP-
A-58 194 986 (MITSUBISHI JUKOGYO K.K.)
14-11-1983**

**Idem**

(73) Proprietor: **THE DOW CHEMICAL COMPANY
2030 Dow Center Abbott Road P.O. Box 1967
Midland Michigan 48640-1967(US)**

(72) Inventor: **Henley, John P.
13545 Shortridge Avenue
Baton Rouge Louisiana 70816(US)**
Inventor: **Pearson, Stanley R.
544 S. Lakeview Drive
Baton Rouge Louisiana 70810(US)**
Inventor: **Peters, Bruce C.
6111 Pinewood Drive
Midland Michigan 48640(US)**

(74) Representative: **Burford, Anthony Frederick et
al
W.H. Beck, Greener & Co. 7 Stone Buildings
Lincoln's Inn
London WC2A 3SZ(GB)**

Rank Xerox (UK) Business Services

## Description

This invention relates to the gasification of carbonaceous materials. More particularly, the invention relates to the conversion of a solid carbonaceous fuel into synthesis gas having increased fuel value.

Three basic processes have been developed for the gasification of carbonaceous materials such as coal. They are: (1) fixed-bed gasification, (2) fluidized-bed gasification, and (3) suspension or entrainment gasification. The present invention relates to the third type of process, suspension or entrainment gasification.

An inherent disadvantage of entrainment gasifiers is that they generate hot product gases. The heat must be recovered from the gases in order to utilize fully the heating value of the coal. It is known to quench partial oxidation gasification reactions directly in water or steam according to U.S. 2,957,387, U.S. 3,000,711 and U.S. 3,723,345, or to partially cool the effluent gases by indirect heat exchange, as taught in U.S.3,025,149. However, large amounts of heat are lost without enhancing the fuel value of the synthesis gas produced.

Some of the reactions in a coal gasifier are exothermic and some are endothermic. A coal-gasification process in which the heat generated by the exothermic reactions is used to provide the heat required for the endothermic reactions would be extremely desirable and energy efficient. Thus, it is an object of the present invention to provide an exothermic reactor partially oxidizing carbonaceous material with an oxygen-containing gas combined with a heat recovery unit to permit the endothermic reactions to proceed efficiently by reacting additional carbonaceous material with water, producing enhanced quality synthesis gas. This and other objects are accomplished in accordance with the present invention as described hereinbelow.

FR-A-2400550 (corresponding to US-A-4168956) acknowledges entrained flow coal gasifiers comprising combustion and reduction zones. The combustion zone is operated at near stoichiometric conditions to substantially completely burn pulverized coal with maximum heat generation. In the reduction zone, an additional charge of pulverized coal, is devolatilized and the carbon particles combine with the combustion products from the combustion zone to form a gas which is largely carbon monoxide. FR-A-2400550/US-A-4168956 teaches the improvement of a two level combustion zone in which, when gasifier output is reduced, the ratio of air to coal supplied is reduced below stoichiometric in the upper combustion zone level whilst maintaining near stoichiometric ratio in the lower combustion zone level, thereby extending coal gasification from the reduction zone into the upper combustion zone level. In the absence of any reference to operating pressures, it is assumed that the gasifier is operated at near atmospheric pressure, similar to a conventional boiler. There is no reference in FR-A-2400550/US-A-4168956 to the production of synthesis gas or to use of a liquid carrier for the pulverized coal.

JP-A-58194986 (as reported in Patent Abstracts of Japan, Volume 8 number 34) discloses a two stage gasification furnace in which coal or low-quality oil is gasified. The improvement taught by JP-A-58194986 is the provision, upstream of the first gasification stage, of a single stage slag tap type auxiliary combustion furnace fed with fused coal ash slag from the first gasification stage or part of the oil and non-gasified coal recovered from the second gasification stage. There is no reference to operating pressure, to the production of synthesis gas, or to the use of a liquid carrier for the coal.

US-A-3607156 discloses the production of synthesis gas by heating an atomized solid carbonaceous fuel dispersion in a single reaction zone at a temperature of 1,800° to 3,500°F (1000° to 1950°C) and a pressure of 100 to 3,000 psig (0.7 to 21 MPa). The atomized dispersion is formed by contacting a low velocity (5 to 50 ft/sec; 1.5 to 15 m/sec) stream of a pumpable (1 to 60 weight percent solids) slurry of the fuel in water and/or hydrocarbon liquid fuel with a high velocity (100 ft/sec (30 m/sec) to sonic velocity) stream of oxidizing gas.

In general, the present invention provides a noncatalytic two-stage upflow process for the production of synthesis gas from solid carbonaceous fuels. the first stage or step of the process comprises the combustion, in a fired horizontal slagging reaction zone, or first stage reactor, of a stream of oxygen-containing gas and a first increment of a slurry of particulate carbonaceous solids in an aqueous liquid carrier. The solids concentration of the slurry may be from 30 to 70 percent by weight. Combustion usually occurs at a temperature between 2400°F (1300°C) and 3000°F (1650°C) in the horizontal reactor zone by using opposed, facing horizontal burner nozzles. Preferably, the horizontal burner nozzles are also coaxial, but this is not required. The oxygen, carbonaceous solids and liquid carrier are converted into steam, vapor from the liquid carrier, slag, char, and gaseous combustion products. The slag which forms in the reactor flows by gravity to the bottom of the reactor and out of the reactor through a tap hole.

In the second stage, or step, the steam, vapor from the liquid carrier, char, and gaseous combustion products from the fired horizontal reactor are contacted, in an unfired vertical heat recovery unit, or second stage reactor, with a second increment of slurry of particulate carbonaceous solids in a liquid carrier to yield steam, vapor from the liquid carrier, synthesis gas and char entrained in the gaseous effluent. As used herein, the term "unfired" means that further combustion is not promoted by the addition of a second oxygen-containing gas stream. The vertical heat recovery unit does not promote additional combustion and exothermic reactions such as which occur in the fired horizontal reactor. In the vertical heat recovery unit, endothermic reactions predominate using heat produced by the combustion in the fired horizontal reactor. The second increment of particulate carbonaceous solids in a liquid carrier is injected into the vertical heat recovery unit by means of a nozzle, with steam or other atomizing gas for atomization of the slurry of particulate carbonaceous solids to provide better reaction. Injecting the second increment of slurry at a point downstream of the original injection point reduces the temperature of the gases exiting from the fired horizontal reactor and provides a more efficient use of the heat removed in the process. Thus, while the fired horizontal reactor is primarily a combustion reactor, the vertical heat recovery unit is primarily a quench reactor which increases the heating value of the gases. The solids concentration of the second increment of slurry is from 30 to 70 percent by weight. The temperature of the vertical heat recovery unit usually is from 1600°F (850°C) to 2000°F (1100°C). In a preferred embodiment of the present process, the unfired vertical heat recovery unit is connected directly to the top of the fired horizontal reactor so that the hot reaction products are conveyed directly from the horizontal reactor to the heat recovery unit to minimize heat losses in the gaseous reaction products and entrained solids. Direct connection also has the advantage of maintaining temperatures to prevent the slag formed from cooling in the horizontal reactor and forming solid deposits.

The synthesis gas and char entrained in the gaseous effluent from the unfired vertical heat recovery unit exit from the top can be separated in a cyclone separator. The char exiting the cyclone separator can be mixed with a liquid carrier forming a dilute slurry which is thereafter concentrated in a settling tank to a solids concentration of from 10 to 30 percent by weight. Then from 5 to 20 percent of the concentrated, or recycle, char slurry, based on the total amount of solid carbon fuel to the first stage, can be added to the first stage horizontal slagging reactor zone, preferably after mixing with one or more streams of particulate carbonaceous solids comprising the first increment fed to the horizontal fired slagging reactor.

The figure of the drawing is a schematic representation of apparatus useful in and a pictorial process flow diagram for carrying out a preferred embodiment of the process of the present invention.

The following description illustrates the manner in which the principles of the present invention are applied, but is not to be construed in any sense as limiting the scope of the invention.

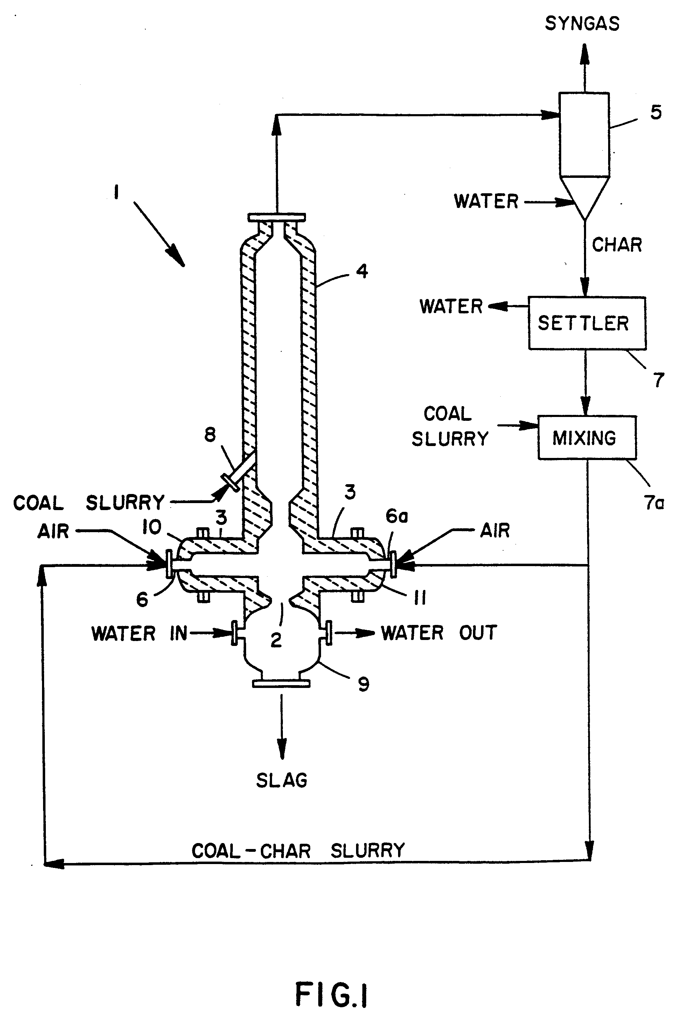

More specifically, as shown in Figure 1, first and second streams comprising oxygen or an oxygen-containing gas, such as, for example, air or oxygen-enriched air, and a first increment of a slurry of particulate carbonaceous solids and liquid carrier enter apparatus 1 through mixing nozzles 6 and 6a, respectively. Mixing nozzles 6 and 6a are located oppositely in and extend through ends 10 and 11, respectively, of horizontal fired slagging reactor 3. Within horizontal fired slagging reactor 3, the feed streams are converted exothermically into steam, slag, char, vapor from the liquid carrier, hydrogen, carbon monoxide, carbon dioxide and minor amounts of other gases. The slag formed as a by-product is drained from the bottom of the reactor 3 through a tap hole 2, to a slag quench section 9 and continuous depressurizing system (not shown). As the steam, char and intermediate gases leave the reactor 3, they flow upward into an unfired heat recovery unit 4 where a second increment of a slurry of particulate carbonaceous solids and liquid carrier is injected through nozzle 8. The heat produced in the reactor 3 and carried upward is used to effect the endothermic processes which take place in heat recovery unit 4 including vaporization of the feed water, the carbon-steam reaction and the water-gas reaction between the CO and $H_2O$. The carbon-steam reaction forms CO and $H_2$, thus increasing the yield of these usable gases. In the last reaction, carbon monoxide reacts with water or steam to form carbon dioxide and additional hydrogen. The reactions occurring in heat recovery unit 4 thus enrich the intermediate gases and produce a higher grade of synthesis gas.

The mixing, or two-fluid, nozzles 6 and 6a provide an atomized feed of the particulate carbonaceous solids slurry giving more efficient combustion of the carbonaceous solids. Preferably, the nozzles are of the type having a central tube for the slurry and an annular space surrounding the central tube containing the atomizing gas which opens to a common mixing zone internally or externally to provide for the atomization of the slurry. Further, the injection nozzle 8 of the unfired heat recovery unit 4 can also be a nozzle of the type described hereinabove. Both mixing nozzles 6 and 6a and injection nozzle 8 can be of the internal or external mixing type, as is conventionally known to those skilled in the art.

As further shown in Figure 1, the effluent from the heat recovery unit 4 is sent to a cyclone separator 5 which splits the effluent into a solids stream and a gas stream, which includes the synthesis gas. The gas stream comprises hydrogen, carbon monoxide, a small amount of methane, $H_2S$, ammonia, water vapor or steam, vapor from the liquid carrier, nitrogen and carbon dioxide. The solids stream comprises ash and char formed in the heat recovery unit 4 or carried over from the horizontal reactor 3. The synthesis gas is recovered as the desired fuel-rich product, and the char is formed into a low concentration slurry, settled, combined and recycled with fresh carbonaceous solids/liquid carrier slurry and recycled to the reactor 3, as more fully described below.

The solids stream, comprising char and ash, separated from the gas stream in cyclone separator 5, contacts a liquid carrier to form a dilute slurry and goes to a settling vessel 7 for concentration. The settling vessel 7 may include separation and evaporation means (not shown) to provide a more concentrated slurry. A stream exiting vessel 7 forms a recycle char slurry stream. The preferred recycle slurry of char and liquid carrier defines a solids concentration of from 20 to 40 percent by weight, more preferably from 30 to 40 percent by weight. The slurry of char and liquid carrier may have a higher percentage of solids, however, too high a solids concentration makes the feed to fired horizontal reactor 3 too viscous for convenient pumping. It is desirable to mix the recycle slurry of char and liquid carrier with the feed slurry particulate carbonaceous solids and liquid carrier in a mixing vessel 7a before it is transferred into fired horizontal reactor 3 through mixing nozzles 6 and 6a.

The materials of construction of the reactor 3 and heat recovery unit 4 are not critical. Preferably, but not necessarily, the vessel walls are steel and are lined with an insulating castable or ceramic fiber or refractory brick, such as dense phase magnesia-chromia spinel, a magnesia-aluminate spinel, or a high chrome-zirconia brick, all of which are commercially available from several sources. Use of this type of system provides the high recovery of heat values from the carbonaceous solids used in the process. Optionally and alternatively, the walls may be unlined by providing a "cold wall" system for fired horizontal reactor 3 and optionally heat recovery unit 4. The term "cold wall", as used herein, means that the walls are cooled by an external cooling jacket, as is known conventionally in the art. In this system, the slag freezes on the interior wall and provides for protection of the metal walls of the cooling jacket.

The reaction conditions in the process vary with the type of feed and the kind of conversion desired. In general, the temperature of reactor 3 is maintained from 2400°F (1300°C) to 3000°F (1650°C). At temperatures lower than this, the slag tends to become more viscous and freezes, causing buildup and eventual plugging of the reactor. At temperatures above 3000°F (1650°C), reaction occurs readily; however, a less satisfactory product gas is produced, heat losses become more considerable and a less economical operation obtains. In heat recovery unit 4, a temperature of 1600°F (850°C) to 2000°F (1100°C) is desirable because at lower temperatures, the conversions of carbonaceous materials to gaseous products are lowered resulting in higher amounts of char production for reslurry and recycle. The upper temperature in heat recovery unit 4 depends primarily on the temperature in fired horizontal reactor 3. The hot intermediate product flowing upward from fired horizontal reactor 3 provides heat for the endothermic reactions occurring in the heat recovery unit 4. Although the temperatures in each portion of the apparatus are important, the specific reaction conditions, per se, are not critical to the process or apparatus of this invention. The process of this invention is carried out at above atmospheric; the pressure in reactor 3 being from 50 psi (350 kPa gauge) to 450 psig (3100 kPa gauge). At pressures greater than 450 psig (3100 kPa gauge), the capital cost of high pressure reaction equipment makes the process economically less attractive; while at pressures lower than 50 psi (350 kPa gauge), the throughput of the gaseous products in the reactor 3 and heat recovery unit 4 is lower than economically attractive. Preferably, the process runs at pressures of from 100 psig (700 kPa gauge) to 400 psig (2750 kPa gauge) and,, most preferably, from 250 to 400 psig (1700 to 2750 kPa gauge).

The process is applicable to any particulate carbonaceous material. Moreover, the nature and concentration of the carbonaceous material in the two stages need not be the same. Preferably, however, the particulate carbonaceous material is coal which, without limitation, includes lignite, bituminous coal, sub-bituminous coal, or any combination thereof. Additional carbonaceous materials are coke from coal, coal char, coal liquefaction residues, particulate carbon, petroleum coke, carbonaceous solids derived from oil shale, tar sands, pitch, concentrated sewer sludge, bits of garbage, rubber and mixtures thereof. The foregoing exemplified materials can be in the form of comminuted solids or as pumpable slurries in a liquid carrier.

The liquid carrier for carbonaceous solid materials can be any aqueous liquid which is capable of vaporizing and participating in the reactions to form synthesis gas.

Any gas containing at least 20 percent oxygen may be used as the oxygen-containing gas fed to fired horizontal reactor 3. Preferred oxygen-containing gases include oxygen, air, and oxygen-enriched air with air as the oxygen-containing gas, the initial atomic ratio of free elemental oxygen to carbon in the reactor 3 is from 1.5:1 to 2.5:1. With oxygen, the ratio is from 1:1 to 2:1.

The concentration of particulate carbonaceous material in the carrier liquid as a slurry is only that necessary to have a pumpable mixture. This generally ranges up to 70 percent by weight of the solid material. Preferably, the concentration of particulate carbonaceous material in the slurry ranges from 30 percent to 70 percent by weight in both the first and second stages of the process. More preferably, the concentration of coal in aqueous slurry is between 45 and 55 percent by weight.

When coal is the feedstock, it is pulverized before being blended with a liquid carrier to form a slurry. In general, any reasonably finely-divided carbonaceous material may be used, and any of the known methods of reducing the particle size of particulate solids may be employed. Examples of such methods include the use of ball, rod and hammer mills. While particle size is not critical, finely divided carbon particles are preferred. Powdered coal used as fuel in coal-fed power plants is typical. Such coal has a particle size distribution in which 90 percent by weight of the coal passes through a 200 mesh sieve, Tyler series (0.07mm).

The present invention is illustrated by the following examples, which are not to be construed as in any sense limiting the scope of the invention.

### Example 1

A slurry at 80°F ( 27°C ) containing 52 percent pulverized sub-bituminous coal, i.e., Western Coal, and 48 percent water by weight was injected into the fired horizontal reactor 3 at a rate of 52 gallons/minute ( 195 liters/minute), together with a stream of air at 950°F (510°C) flowing at a rate of 90,000 pounds/hour 41,000 kg/hr). The temperature within the reactor 3 was 2600°F (1430°C) and the pressure was 120 psig ( 825 kPa gauge ). The steam and hot product gases made in the reactor 3 were passed upward into the unfired heat recovery unit 4. where they were contacted with a second increment of slurry at 80°F (27°C) containing 52 percent pulverized sub-bituminous coal and 48 percent water by weight, flowing at a rate of 20 gallons/minute ( 75 liters/minute), along with atomizing steam at 465°F (240°C ) flowing at a rate of 7,000 pounds/hour (3200 kg/hr).

In the heat recovery unit 4, the heat generated in the reactor 3 was absorbed by the second increment of slurry and used to convert the slurry into more steam and gaseous products. The temperature within the heat recovery unit 4 was 1800°F (980°C). The steam and gaseous products were discharged from the heat recovery unit 4 to the cyclone separator 5, where the mixture was separated into a gaseous stream and a solids stream. The discharge from the reactor 3 comprised 10.4 percent hydrogen, 10.4 percent carbon monoxide, 15.0 percent carbon dioxide, 0.04 percent methane, and 65.0 percent nitrogen on a dry basis. The gas stream discharged from the cyclone separator 5 at a rate of 100,000 pounds/hour ( 45,000 Kg/hr) and comprised 11.8 percent hydrogen, 8.8 percent carbon monoxide, 15.4 percent carbon dioxide, 0.5 percent methane, and 63.4 percent nitrogen by volume on a dry basis. The solids were mixed with water at 200-300°F ( 95 to 150°C ) flowing at a rate of 300 gallons/minute ( 1100 liters/minute) to form a slurry which can be concentrated to 25 percent solids by weight and recycled to the fired reactor 3 or discharged to waste treatment, as desired.

### Example 2

A slurry at 80°F ( 27°C ) containing 50 percent pulverized sub-bituminous coal and 50 percent water by weight was injected into the fired horizontal reactor 3 at a rate of 52 gallons/minute ( 195 liters/minute), together with a stream of air at 950°F (510°C) flowing at a rate of 90,000 pounds/hour ( 41,000 Kg/hr). The temperature within the reactor 3 was 2650°F (1450°C ) and the pressure was 110 psig ( 760 kPa gauge). The steam and hot product gases made in the reactor 3 were passed overhead into the unfired heat recovery unit 4, and were there contacted with a second increment of slurry at 80°F ( 27°C) containing 40 percent pulverized subbituminous coal and 60 percent water by weight, flowing at a rate of 28 gallons/minute (105 liters/minute). along with atomizing steam at 465°F (240°C ) flowing at a rate of 7,000 pounds/hour ( 3200 kg/hr). In the heat recovery unit 4, the heat generated in the reactor 3 was absorbed by the second increment of slurry, and used to convert the slurry into more steam and gaseous products. The temperature within the heat recovery unit 4 was 1800°F (980°C). The steam and gaseous products were discharged from the heat recovery unit 4 to the cyclone separator 5, where the mixture was separated into a gaseous stream and a solids stream. The gaseous products discharged overhead from the reactor 3 comprised 9.5 percent hydrogen, 10.2 percent carbon monoxide, 16.5 percent carbon dioxide, 0.07 percent methane, and 63.6 percent nitrogen on a dry basis. The gaseous products discharged overhead from the cyclone separator 5 at a rate of 112,000 pounds/hour ( 51,000 kg/hr) comprised 12 percent hydrogen, 10.0 percent carbon monoxide, 11.0 percent carbon dioxide, 0.5 percent methane and 66.4 percent nitrogen on a dry basis. The solids were mixed with water at 200-300°F (95 to 150°C) flowing at a rate of 300 gallons/minute ( 1100 liters/minute) to form a slurry which can then be concentrated to 25 percent solids by weight and recycled to the fired reactor 3 or discharged to waste treatment, as desired.

Example 3

In this example, a slurry of pulverized lignite and water was used as feed to a reactor similar to that illustratively shown as the apparatus 1 of Figure 1. Oxygen of 99.6 percent purity was used as the oxygen-containing gas instead of air.

A slurry at 75°F ( 24°C ) containing 44.5 percent dry lignite by weight was injected into the fired horizontal reactor 3 at a rate of 2930 pounds/hour ( 1300 kg/hr ), together with oxygen at 63°F (17°C) flowing at a rate of 1621 pounds/hour ( 735 Kg/hr). The temperature within the reactor 3 was 2500°F ( 1371°C), and the pressure was 240 psig (1650 kPa gauge). One hundred pounds/hour ( 45 kg/hr) of nitrogen was added to the fired horizontal reactor 3 via instrument purges. The steam and hot product gases generated in the fired horizontal reactor 3 were passed upward into the unfired heat recovery unit 4, and were there contacted with a second increment of slurry at 75°F (24°C ) containing 44.5 percent dry lignite by weight flowing at a rate of 874 pounds/hour ( 396 Kg/hr), along with atomizing steam at 465°F ( 240°C ) flowing at a rate of 161 pounds/hour ( 73 kg/hr). In the heat recovery unit 4, heat generated in the fired horizontal reactor 3 was absorbed by the second increment of slurry, and used to convert the slurry into more steam and gaseous products. The temperature within the heat recovery unit 4 was 1840°F (1005°C ). The steam and gaseous products were discharged from the heat recovery unit 4 into the cyclone separator 5, where the mixture was separated into a gaseous stream and a solids stream. The solids stream was added to water and discharged. The discharge from the reactor 3 comprised 43.3 percent hydrogen, 26.6 percent carbon monoxide, 23.3 percent carbon dioxide, 0.8 percent methane, and 5.9 percent nitrogen by volume on a,dry basis. The gas stream discharged from the cyclone comprised 48.8 percent hydrogen, 22.2 percent carbon monoxide, 23.3 percent carbon dioxide, 2.2 percent methane, and 3.5 percent nitrogen by volume on a dry basis.

Example 4

A slurry at 200°F ( 93°C ) containing 49.5 percent pulverized sub-bituminous coal and recycled char, the net being 50.5 percent water by weight, was injected into the fired horizontal reactor 3 at a rate of 86 gallons/minute ( 325 liters/minute), together with a stream of oxygen flowing at a rate of 29,200 pounds/hour ( 13,250 kg/hr). The feed slurry was a mixture of 0.926 volume fraction, sub-bituminous coal slurry at 51 percent solids and 0.074 volume fraction char slurry at 30 percent solids. The temperature within the reactor 3 was 2840°F (1560°C) and the pressure was 120 psig ( 825 kPa gauge). The steam and hot product gases made in the reactor 3 were passed overhead into the unfired heat recovery unit 4, and were there contacted with a second increment of slurry at 90°F (32°C ) containing 50 percent pulverized sub-bituminous coal and 50 percent water by weight, flowing at a rate of 25 gallons/minute ( 95 liters/minute), along with atomizing steam at 465°F (240°C ) flowing at a rate of 7,000 pounds/hour (3200 kg/hr). In the heat recovery unit 4, the heat generated in the reactor 3 was absorbed by the second increment of slurry, and used to convert the slurry into more steam and gaseous products. The temperature within the heat recovery unit 4 was 1920°F ( 1050°C). The steam and gaseous products were discharged from the heat recovery unit 4 to the cyclone separator 5, where the mixture was separated into a gaseous stream and a solids stream. The gaseous products discharged overhead from the reactor 3 comprised 32.7 percent hydrogen, 31.5 percent carbon monoxide, 30.5 percent carbon dioxide. 0 percent methane, and 5.3 percent nitrogen on a dry basis. The gaseous products discharged overhead from the cyclone separator 5 at a rate of 50,504 pounds/hour ( 22,900 kg/hr) comprised 36.1 percent hydrogen, 26.7 percent carbon monoxide, 31.8 percent carbon dioxide. 0.5 percent methane and 4.9 percent nitrogen on a dry basis. The solids from the bottom of the cyclone were mixed with water at 200 to 300°F ( 95 to 150°C ) flowing at a rate of 300 gallons/minute ( 1135 liters/minute) to form a slurry which was then concentrated to about 25 percent solids by weight and recycled to the fired reactor 3.

While certain representative embodiments and details have been shown for the purpose of illustrating the present invention, it will be apparent to those skilled in the art that various changes and modifications can be made therein without departing from the scope of the invention as defined in the following Claims.

**Claims**

1. A non-catalytic two-stage upflow process for the Production of synthesis gas by combustion at elevated pressure of a mixture of oxygen-containing gas and an aqueous slurry of particulate carbonaceous fuel, characterized in that

(a) a stream of said oxygen-containing gas and a first increment of said slurry is combusted in a fired horizontal slagging reactor at 1300° to 1650°C (2400° to 3000°F) and 350 to 3100 Kpa (50 to 450 psig) using opposed horizontal burner nozzles; and

(b) the steam, vapor from the carrier liquid, char, and gaseous combustion products from the fired horizontal reactor are discharged to an unfired vertical heat recovery unit operating at 850° to 1100°C (1600° to 2000°F) and into which a second increment of said slurry is introduced thereby recovering the heat evolved in the reactor and converting the carbonaceous material and carrier liquid into steam, vapor from the carrier liquid, synthesis gas and char.

2. A process as claimed in Claim 1, wherein the pressure is from 700 to 2750 kPa (100 to 400 psig).

3. A process as claimed in Claim 2, wherein the pressure is from 1700 to 2750 kPa (250 to 400 psig).

4. A process as claimed in any one of the preceding claims, further comprising the step of:

(c) recycling to step (a) the char formed in step (b) as an aqueous suspension having a solids concentration of from 20 percent to 40 percent by weight.

5. A process as claimed in Claim 4, wherein step (c) further comprises the steps of:

($c_1$) separating the char from the synthesis gas;

($c_2$) contacting the char with the liquid carrier thereby forming the aqueous suspension of char; and

($c_3$) recycling the char suspension to the fired reactor.

6. A process as claimed in any one of the preceding claims, wherein the carbonaceous material is introduced as a slurry having a solids concentration of from 30 to 70 percent by weight.

7. A process as claimed in Claim 6, wherein the said solids concentration is 45 to 55 percent by weight.

8. A process as claimed in any one of the preceding claims, wherein the oxygen-containing gas is air, oxygen-enriched air, or oxygen.

9. A process as claimed in any one of the preceding claims, wherein the oxygen-containing gas is air and the initial atomic ratio of free elemental oxygen to carbon in the reactor is between 1.5:1 and 2.5.:1.

10. A process as claimed in any one of the preceding claims, wherein the carbonaceous material is coal or lignite.

11. A process as claimed in any one of the preceding claims, wherein said unfired vertical heat recovery unit is connected to the top of said fired horizontal reactor.

**Revendications**

1. Procédé ascendant à deux étages, non catalytique, pour la production de gaz de synthèse par combustion, sous une pression élevée, d'un mélange de gaz contenant de l'oxygène et d'une suspension aqueuse de combustible carboné particulaire, caractérisé en ce que

(a) un courant dudit gaz contenant de l'oxygène et d'une première partie de ladite suspension est brûlé dans un réacteur de scorification horizontal chauffé à une température de 1300° à 1650°C (2400° à 3000°F) et sous 350 à 3100 kPa (50 à 450 psig) au moyen de brûleurs à injecteurs horizontaaux opposés; et

(b) la vapeur d'eau, la vapeur du liquide véhicule, le produit de carbonisation et les produits gazeux de combustion issus du réacteur horizontal chauffé sont déchargés dans une unité verticale de récupération de la chaleur, non chauffée et fonctionnant à une température de 850° à 1100°C (1600° à 2000°F), et dans laquelle une seconde partie de ladite suspension est introduite, ce qui permet de récupérer la chaleur dégagée dans le réacteur et de transformer la matière carbonée et le liquide véhicule en vapeur d'eau, vapeur du liquide véhicule, gaz de synthèse et produit de carbonisation.

2. Procédé selon la revendication 1, dans lequel la pression est de 700 à 2750 kPa (100 à 400 psig).

3. Procédé selon la revendication 2, dans lequel la pression est de 1700 à 2750 kPa (250 à 400 psig).

4. Procédé selon l'une quelconque des revendications précédentes, comprenant, en outre, l'étape qui consiste à :

(c) recycler vers l'étape (a) le produit de carbonisation formé dans l'étape (b), sous forme d'une suspension aqueuse ayant une concentration en solides de 20% à 40% en poids.

5. Procédé selon la revendication 4, dans lequel l'étape (c) comprendles étapes qui consistent à :

(c₁) séparer le produit de carbonisation d'avec le gaz de synthèse;

(c₂) mettre en contact le produit de carbonisation avec le véhicule liquide, pour former la suspension aqueuse de produit de carbonisation; et

(c₃) recycler la suspension de produit de carbonisation vers le réacteur chauffé.

6. Procédé selon l'une quelconque des revendications précédentes, dans lequel la matière carbonée est introduite sous forme d'une suspension ayant une concentration en solides de 30 à 70% en poids.

7. Procédé selon la revendication 6, dans lequel ladite concentration en solides est de 45 à 55% en poids.

8. Procédé selon l'une quelconque des revendications précédentes, dans lequel le gaz contenant de l'oxygène est de l'air, de l'air enrichi en oxygène ou de l'oxygène.

9. Procédé selon l'une quelconque des revendications précédentes, dans lequel le gaz contenant de l'oxygène est de l'air et le rapport atomique initial de l'oxygène élémentaire libre au carbone présent dans le réacteur vaut entre 1,5:1 et 2,5:1.

10. Procédé selon l'une quelconque des revendications précédentes, dans lequel la matière carbonée est du charbon ou du lignite.

11. Procédé selon l'une quelconque des revendications précédentes, dans lequel ladite unité verticale de récupération de la chaleur, non chauffée, est raccordée au sommet dudit réacteur horizontal chauffé.

**Patentansprüche**

1. Nichtkatalytisches zweistufiges Aufwärtsstromverfahren zur Herstellung von Synthesegas durch Verbrennung eines Gemisches eines sauerstoffhaltigen Gases und einer wäßrigen Aufschlämmung von teilchenförmigem kohlenstoffhaltigem Brennstoff bei erhöhtem Druck, dadurch gekennzeichnet, daß

(a) ein Strom des sauerstoffhaltigen Gases und ein erstes Inkrement der Aufschlämmung in einem befeuerten, horizontalen Schlackenabzugsreaktor bei 1300° bis 1650°C (2400° bis 3000°F) und 350 bis 3100 kPa (50 bis 450 psig) unter Verwendung gegenüberliegender horizontaler Brennerdüsen verbrannt wird und

(b) der Dampf, Abdampf von der Trägerflüssigkeit, Koks und gasförmige Verbrennungsprodukte aus dem befeuerten, horizontalen Reaktor in eine nicht befeuerte, vertikale Wärmerückgewinnungseinheit eingeleitet werden, die bei 850° bis 1100°C (1600° bis 2000°F) betrieben wird und in die ein zweites Inkrement der Aufschlämmung eingebracht wird, wodurch die im Reaktor entwickelte Wärme rückgewonnen wird und das kohlenstoffhaltige Material und die Trägerflussigkeit in Dampf, Abdampf aus der Trägerflüssigkeit, Synthesegas und Koks umgewandelt werden.

2. Verfahren nach Anspruch 1, worin der Druck von 700 bis 2750 kPa (100 bis 400 psig) ist.

3. Verfahren nach Anspruch 2, worin der Druck von 1700 bis 2750 kPa (250 bis 400 psig) ist.

4. Verfahren nach einem der vorhergehenden Ansprüche, weiterhin umfassend den Schritt:

(c) Rückführen des in Schritt (b) gebildeten Koks zu Schritt (a) als wäßrige Suspension mit einer Feststoff-Konzentration von 20 Gew.-% bis 40 Gew.-%.

5. Verfahren nach Anspruch 4, worin Schritt (c) weiterhin die Schritte umfaßt:

(c₁) Abtrennen des Koks vom Synthesegas,

(c₂) Kontaktieren des Koks mit dem flüssigen Träger, wodurch die wäßrige Suspension von Koks gebildet wird, und

(c₃) Rückführen der Kokssuspension zum befeuerten Reaktor.

6. Verfahren nach einem der vorhergehenden Ansprüche, worin das kohlenstoffhaltige Material als Aufschlämmung mit einer Feststoff-Konzentration von 30 bis 70 Gew.-% eingebracht wird.

7. Verfahren nach Anspruch 6, worin die Feststoff-Konzentration von 45 bis 55 Gew.-% ist.

8. Verfahren nach einem der vorhergehenden Ansprüche, worin das sauerstoffhaltige Gas Luft, mit Sauerstoff angereicherte Luft oder Sauerstoff ist.

9. Verfahren nach einem der vorhergehenden Ansprüche, worin das sauerstoffhaltige Gas Luft ist und das anfängliche atomare Verhältnis von freiem elementarem Sauerstoff zu Kohlenstoff im Reaktor zwischen 1,5:1 und 2,5:1 ist.

10. Verfahren nach einem der vorhergehenden Ansprüche, worin das kohlenstoffhaltige Material Kohle oder Braunkohle ist.

11. Verfahren nach einem der vorhergehenden Ansprüche, worin die nicht befeuerte, vertikale Wärmerückgewinnungseinheit mit dem Oberteil des befeuerten, horizontalen Reaktors verbunden ist.

FIG.I